Europäisches Patentamt

European Patent Office

Office européen des brevets

(11) Veröffentlichungsnummer: **0 017 843**
**A1**

## (12) EUROPÄISCHE PATENTANMELDUNG

(21) Anmeldenummer: 80101731.0

(22) Anmeldetag: 01.04.80

(51) Int. Cl.³: **A 44 C 11/02**

(30) Priorität: 05.04.79 DE 2913632

(43) Veröffentlichungstag der Anmeldung: 29.10.80
Patentblatt 80/22

(84) Benannte Vertragsstaaten: **AT BE CH FR GB IT LU NL SE**

(71) Anmelder: **Jung, Ernst, Scheibenstrasse 49, D-4000 Düsseldorf 30 (DE)**

(72) Erfinder: **Jung, Ernst, Scheibenstrasse 49, D-4000 Düsseldorf 30 (DE)**

(74) Vertreter: **Stenger, Alex, Dipl.-Ing. et al, Patentanwälte Dipl.-Ing. A. Stenger Dipl.-Ing. W. Watzke, Dipl.-Ing. H.J. Ring Kaiser-Friedrich-Ring 70, D-4000 Düsseldorf 11 (DE)**

(54) Kette mit Knebelverschluss.

(57) Kette mit Knebelverschluss, bei der der Knebel (11) als Hohlschiene ausgebildet ist, mit der das Kettenende gelenkig verbunden ist und deren freier Querschnitt im wesentlichen der Querschnittsfläche der Kette entspricht.

- 1 -

Kette mit Knebelverschluß
_____

Die Erfindung betrifft eine Kette mit Knebelverschluß.

Bei bekannten Ketten dieser Art besteht der Knebel meist aus einem kurzen Profilstab, an dem im wesentlichen mittig das Kettenende befestigt ist und der zum Schließen der Kette durch ein entsprechend ausgebildetes Kettenglied oder durch einen besonders eingeführten Knebelring hindurchgezogen und eingehängt wird. Der freie Querschnitt des Kettengliedes bzw. der Durchmesser des Knebelrings mißt dabei in der Regel ein Vielfaches der addierten Durchmesser von Kette und Stab, damit der Knebelverschluß leicht zu handhaben ist. Bei groben, großgliedrigen Ketten, wie sie z.B. in der Landwirtschaft Verwendung finden, ist daher die Handhabung meist problemlos. Bei feingliedrigen Schmuckketten bedarf es dagegen einer größeren Fingerfertigkeit zum An- und Ablegen der Kette, wenn nicht gleichzeitig eine Störung des ästhetischen Gesamteindrucks der Kette durch eine im Verhältnis zur übrigen Kette übergroße Ausbildung des Knebelverschlusses in Kauf genommen wird. Im übrigen trägt auch die mangelnde Sicherung einer derartigen Kette dazu bei, daß sich der Knebelverschluß insbesondere bei Schmuckketten bisher nicht durchsetzen konnte.

- 2 -

Der Erfindung liegt die Aufgabe zugrunde, eine Kette mit einem Knebelverschluß so auszubilden, daß auch bei kleinsten Abmessungen von Kette und Verschluß eine leichte und sichere Handhabung gewährleistet ist.

Die Aufgabe wird erfindungsgemäß bei einer Kette der eingangs genannten Art dadurch gelöst, daß der Knebel als Hohlschiene ausgebildet ist, mit der das Kettenende gelenkig verbunden ist und deren freier Querschnitt im wesentlichen der Querschnittsfläche der Kette entspricht.

Auf diese Weise kann der Knebel vollständig in die Längsachse der Kette verschwenkt werden, wodurch er sicher und leicht durch ein Kettenglied hindurchgezogen werden kann, das nur unwesentlich größer ist als die die Kette aufnehmende Hohlschiene. Da sich der Knebel nach dem Durchstecken infolge der Gelenkverbindung selbständig wieder öffnet und querstellt, ist ein unbeabsichtigtes Öffnen der Kette praktisch ausgeschlossen.

Um das Verschwenken des Knebels und das Einlegen der Kette in die Hohlschiene zu erleichtern, ist vorzugsweise in der Hohlschiene eine Querachse befestigt, an der das Kettenende angelenkt ist.

Nach einem weiteren Vorschlag der Erfindung kann die Kette in vorbestimmten Abständen mit einer Mehrzahl ringförmiger Kettenglieder zum Durchziehen des Knebels versehen sein, um auf diese Weise gleichzeitig die Länge der Kette den Gegebenheiten anzupassen.

Eine weitere Sicherung der Kette kann dadurch erreicht werden, daß gemäß einer bevorzugten Ausgestaltung der Erfindung beide Enden der Kette mit einem Knebel versehen sind und die ringförmigen Kettenglieder in Bezug zu den Kettenenden symmetrisch angeordnet sind.

Ein Ausführungsbeispiel der Erfindung wird nachfolgend anhand der Zeichnung näher erläutert. Es zeigen:

Fig. 1    eine schematische Darstellung der erfindungsgemäßen Kette, und

Fig. 2    einen Schnitt durch den Knebel entlang der Schnittlinie I - I nach Fig. 1 in vergrößerter Darstellung,

Fig. 3    eine perspektivische Darstellung des Knebels.

Die in der Zeichnung dargestellte Kette 10 ist eine feingliedrige Schmuckkette, die an beiden Enden mit einem Knebel 11 versehen ist. In die Kette 10 sind vorzugsweise eine Mehrzahl ringförmig ausgebildeter Kettenglieder 12 eingefügt, die untereinander einen gleichen Abstand aufweisen und zweckmäßigerweise zu den Kettenenden symmetrisch angeordnet sind.

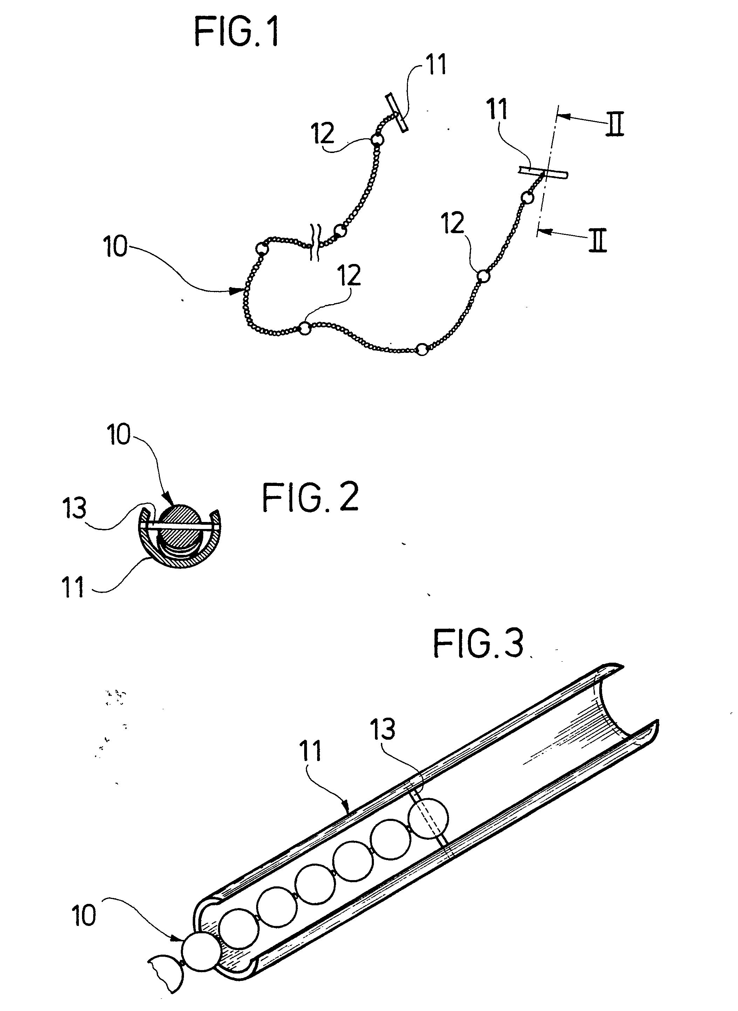

Wie aus Fig. 2 zu ersehen ist, ist der Knebel 11 als Hohlschiene mit einem im wesentlichen halbrunden Querschnitt ausgebildet, in der mittig eine Querachse 13 befestigt ist, an der das jeweilige Kettenende angelenkt ist. Der freie Querschnitt der Hohlschiene ist so bemessen, daß die Kette im Bereich außerhalb der ringförmigen Kettenglieder 12 im wesentlichen vollständig in dem Hohlprofil Platz findet. Der Durchmes-

- 4 -

ser der ringförmigen Kettenglieder 12 braucht daher
nur unwesentlich größer zu sein als der Außendurchmesser der Hohlschiene. Der Abstand des ersten ringförmigen Kettenglieds 12 zum Kettenende bzw. zur Querachse 13 ist vorzugsweise nur unwesentlich größer als
die halbe Länge der Hohlschiene, um den Bewegungsspielraum des Knebels im geschlossenen Zustand der Kette
möglichst gering zu halten.

- 1 -

Ansprüche :

1. Kette mit Knebelverschluß,
   dadurch gekennzeichnet ,
   daß der Knebel (11) als Hohlschiene ausgebildet
   ist, mit der das Kettenende gelenkig verbunden ist
   und deren freier Querschnitt im wesentlichen der
   Querschnittsfläche der Kette (10) entspricht.

2. Kette nach Anspruch 1, dadurch gekennzeichnet,
   daß in der Hohlschiene (11) eine Querachse (13)
   befestigt ist, an der das Kettenende angelenkt ist.

3. Kette nach Anspruch 1 oder 2, dadurch gekennzeichnet, daß die Kette (10) in vorbestimmten Abständen
   mit einer Mehrzahl ringförmiger Kettenglieder (12)
   zum Durchziehen des Knebels (11) versehen ist.

4. Kette nach einem der Ansprüche 1 bis 3, dadurch gekennzeichnet, daß beide Enden der Kette (10) mit
   einem Knebel (11) versehen sind und die ringförmigen Kettenglieder (12) in Bezug zu den Kettenenden
   symmetrisch angeordnet sind.

**FIG.1**

**FIG.2**

**FIG.3**

# EUROPÄISCHER RECHERCHENBERICHT

**Europäisches Patentamt**

00 17 843

Nummer der Anmeldung

EP 80 10 1731

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 385 627 (F. ZUMBO)<br>* Spalte 2, Zeilen 3-51,63-70; Abbildungen 1-3 *<br>-- | 1 |
| A | US - A - 2 522 516 (TH. M.JABLON)<br>* Spalte 2, Zeilen 12-52; Abbildungen *<br>-- | 1 |
| A | GB - A - 1 346 305 (W.A. HASTINGS FORBES)<br>* Seite 2, Zeilen 19-27; Abbildung 3 *<br>-- | 1 |
| A | FR - A - 755 807 (M. FESSLER)<br>* Seite 1, Zeilen 32-48; Abbildungen *<br>-- | 1 |
| A | FR - A - 1 456 049 (A.P. TAILLANT)<br>* Das ganze Dokument *<br>-- | 1 |
| A | US - A - 1 794 384 (CH. MADSEN)<br>* Seite 1, Zeilen 53-82; Abbildungen *<br>-- | 1 |
| P | DE - U - 7 909 837 (E. JUNG)<br>* Zusammenfassung *<br>---- | 1-4 |

**KLASSIFIKATION DER ANMELDUNG (int.Cl.³)**

A 44 C 11/02

**RECHERCHIERTE SACHGEBIETE (Int. Cl.³)**

A 44 C
F 16 G
A 44 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-06-1980 | GARNIER |

EPA form 1503.1 06.78